Europäisches Patentamt

European Patent Office

Office européen des brevets

(11) Publication number: **0 257 170**
**B1**

# EUROPEAN PATENT SPECIFICATION

(45) Date of publication of the patent specification:
24.10.90

(51) Int. Cl.⁵: **A62D 3/00**

(21) Application number: 86830238.1

(22) Date of filing: 29.08.86

(54) Process for the fast chemical decomposition of halogenated and polyhalogenated organic compounds, such as polychlorobiphenyls, polychlorodibenzofurans and polychlorodibenzodioxins, and for the decontamination of surfaces or fluids.

(43) Date of publication of application:
02.03.88 Bulletin 88/9

(45) Publication of the grant of the patent:
24.10.90 Bulletin 90/43

(84) Designated Contracting States:
AT BE CH DE FR GB IT LI LU NL SE

(56) References cited:
EP-A- 0 118 858
US-A- 4 144 152
US-A- 4 432 344

CHEMICAL ABSTRACTS, vol. 101, no. 4, 23rd July 1984, page 477, no. 30986x, Columbus, Ohio, US; Y.OKAWARA et al.: "Effect of irradiation using high frequency waves on the decomposition of PCB and its related compounds by sodium graphite" & KENKYU HOKOKU - KANTO GAKUIN DAIGAKU KOGAKUBU 1984, 27(1), 25-9on"die Sicherheitstechnik beim Umgang mit Braun 000
THE SCIENCE OF THE TOTAL ENVIRONMENT, vol. 10, no. 96, 1978, pages 97-104, Elsevier Scientific Publishing Company, Amsterdam, NL; A.LIBERTI et al.: "Solar and UV photodecomposition of 2,3,7,8-tetrachloro dibenzo-p-dioxin in the environment"

(73) Proprietor: SEA MARCONI TECHNOLOGIES S.p.a.,
Strada Antica di Collegno, 196, Torino(IT)

(72) Inventor: Tumiatti, Wander, Strada Antica di Collegno, 196, Torino(IT)
Inventor: Nobile, Gilberto, Strada Antica di Collegno, 196, Torino(IT)
Inventor: Tundo, Pietro, Strada Antica di Collegno, 196, Torino(IT)

(74) Representative: Bianchetti, Giuseppe, Studio Consulenza Brevettuale Via Rossini, 8, I-20122 Milan(IT)

## Description

The present invention relates to a novel method for the decomposition of halogenated and polyhalogenated organic compounds and for the decontamination of surfaces or fluids contaminated by these substances. The environmental problem resulting from the high or very high toxicity of polyhalogenated compounds used in industry, such as polychlorobiphenyls, polyhalogenophenols, insecticides such as DDT, Kepone®, or their reaction products resulting at a high temperature, fires, explosions in the case of polyhalogenodibenzodioxins and polyhalogenodibenzofurans, is well known. Due to the high stability of the bond between carbon and halogen the polyhalogenated compounds exhibit practically no biodegradability and they remain in the environment for a period of time which has practically no limit with serious problems of pollution and contamination.

Several methods have been proposed for the degradation of the polyhalogenated compounds. For instance, EP-A 0 118 858 filed by the applicant, describes an effective decontaminating reagent which is active even at room temperature and which may be applied for the decontamination of the soil, parts of installations, buildings, dielectric fluids or other industrial fluids. This reagent consists of:

a) a polyoxygenated compound, such as polyethyleneglycols (PEG), polyhydroxy compounds, the products of polycondensation of ethylene oxide and propylene oxide (Nixolen®);

b) a base, preferably alkali or alkaline earth carbonates or bicarbonates or alkali or alkaline earth alcoholates when component a) is a Nixolen®;

c) optionally an oxidizing agent or a source of free radicals such as $Na_2O_2$ or $BaO_2$. Component c) is not necessary when there are used alkali or alkaline earth alcoholates and Nixolen®.

The reagent may be formulated in various manners with an ample range of viscosity according to the different applications. Further, EP-A 0 135 043, also filed by the applicant, describes a device for the continuous decontamination of industrial fluids by means of the above described reagent, suitably supported and adsorbed on solid supports.

Other methods are based on a reductive photodecomposition. The compound to be destroyed is irradiated with UV radiation of variable wave lengths between 280 and 320 nm in the presence of a hydrogen donor. (Sci. Total Environment 10, 97–104, 1978, Kitchens et al. in Detoxication of Hazardous Waste, Ann. Arbor Science, p. 215–226 and U.S.P. No. 4 144 152.) The method known under the name LARC (Light Activated Reduction of Chemicals), described in the same U.S.P. 4 144 152, utilizes a flow of gaseous hydrogen which optimizes the photochemical conditions to carry out the dehalogenation of halogenated organic substances while the other methods on the other hand utilize acohols which contain very mobile hydrogen atoms.

It has now been found surprisingly and this is the object of the present invention, that the use of artificial UV radiation together with the reagent and the device described in the above mentioned EP-A 0 118 858 and 0 135 043 permits to achieve substantial advantages with respect to the known methods. To state the matter in different words, the chemical processes of dehalogenation obtained by means of the reagent described hereinabove, which are based on a radical-anionic mechanism become much more effective and rapid due to the synergistic action with ultraviolet radiation. Differently from the known methods, it is not necessary to use a specific and effective donor of hydrogen or gaseous hydrogen. The method according to the invention is particularly simple, economical and practical also for applications in the field such as, soil, extended surfaces in the open, etc. because it requires the use of reagents which are of little cost, easily available and not dangerous and artificial UV sources which are easy to handle and easily available.

It is, for instance, possible to use, high or low pressure mercury vapor lamps and wave lengths between 280 and 320 nm.

The process according to the present invention may be used for the decontamination of metallic surfaces, porous surfaces, such as plaster, cement, wood, grit, etc. or hydrocarbons fluids, silicone fluids, non-halogenated synthetic fluids such as gas oil and oil for transformers, etc.

As already shown in the EP-A 0 118 858, the viscosity of the reagent being used may be regulated essentially by the choice of component a)and depends on the type of material being treated. Therefore, a liquid reagent is particularly suitable for porous materials, while metallic surfaces require preferably a viscous reagent or a reagent capable of forming a solid film which later may be removed. A typical example of a reagent may consist of 5-40% by weight of sodium carbonate, 0.1-10% by weight of sodium peroxide or barium peroxide and 50-95% by weight of Nixolen® optionally in mixture with PEG. Alternatively, it is possible to use a reagent consisting exclusively of 80-95% by weight of a Nixolen and 20-5% by weight of an alkali alcoholate such as sodium methylate. The reagent may be applied by spraying, spreading or brushing, or in the case of decontamination of fluids, they are simply caused to pass on a support on which the reagent previously has been adsorbed. This support which may also consist of the same base which is part of the composition of the reagent, may optionally be inserted in a device of the type described in EP-A 0 135 043.

Further it has been found that the penetration of the reagent into porous materials may be significantly improved by using polyether solvents, in particular ethylene or propylene glycols which are mono or

2

disubstituted with alkyl groups such as diethylene glycol dimethyl ether or diglyme®, optionally in the presence of tensioactive agents and surfactants. Finally, always for the purpose of promoting the reaction of dehalogenation, in addition to UV radiation it is possible to rely on other synergistic actions, such as thermal sources, IR, microwaves, electric and ultrasonic fields, the utility of which has already been found and described previously. In the presence of artificial UV radiation, the decontamination reaction proceeds rapidly also at room temperature, a fact which is particularly convenient for the application to large surface areas in the open, etc.

The following Examples are not intended to limit the invention but merely to illustrate in more detail the process according to the invention and the advantages which may be achieved.

## EXAMPLE 1 – SUPPORT METALLIC PLATE CONTAMINATED WITH PCB

A liquid reagent in the amount of 1000 mg/m² is spread on two steel plates of 100 x 100 mm size contaminated by 1000 mg/m² of PCB in such a manner to form a continuous film. The liquid reagent consists of Nixolen® VS13 and sodium methylate in the proportions of 95–5 by weight.

One plate (plate A) is exposed to UV radiation from a high pressure mercury vapor lamp with 150 w while the other plate serves as control. The results obtained from the analysis with gas chromatoghraphy and with the electron capture detector (GCECD) are summarized in the table below.

| Experimental conditions | Unit of* measure | Plate A with UV | Plate B without UV |
|---|---|---|---|
| Initial surface contamination | mg/m2 | 1,000 | 1,000 |
| Quantity of the reagent | g/m2 | 1,000 | 1,000 |
| Reaction temperature | °C | 20 | 20 |
| Reaction time of plate A | hours | 44 | 336 |
| Final surface contamination | mg/m2 | < 1 | 2 |

* mq = square meter

## EXAMPLE 2 - POROUS SUPPORT, MORTAR CONTAMINATED WITH PCB

Two blocks of mortar of composition consisting of 3 parts of sand, 1 part of cement 345, and 0.8 parts of water, of dimensions 35 x 35 x 25 mm are contaminated with 300 mg/m² of PCB.

The contaminated surface is treated with 3000 g/m² of 1 : 1 solution of amixture of Nixolen® VS13 - sodium methylate (95:5 by weight) in diethylene glycol dimethyl ether as a solvent (Diglyme®).

One of the blocks (A) is exposed to UV source as in Example 1 and the comparison has been made with the reaction carried out in the absence of UV radiation.

The results analyzed with GCECD, are summarized hereinbelow.

| Experimental conditions | Unit of measure | Support A with UV | Support B without UV |
|---|---|---|---|
| Initial surface contamination | mg/m2 | 300 | 300 |
| Quantity of the reagent | g/m2 | 3,000 | 3,000 |
| Reaction temperature | °C | 20 | 20 |
| Reaction time | hours | 15 | 328 |
| Final surface contamination | mg/m2 | 1 | 75 |

### EXAMPLE 3 - SUPPORT: MINERAL OIL CONTAMINATED WITH PCB

In two 500 cc beakers containing ISOVOLTINE® mineral oil contaminated with 1,000 ppm pf PCB, there is introduced the following reagent: Nixolen® VS13 - sodium methylate (85:15 by weight) at a concentration of 2,000 ppm per beaker.

In one beaker there is immersed the UV source protected by a quartz shield. The results obtained by GCECD nalysis are summarized in the table hereinbelow.

4

| Experimental conditions | Unit of measure | Support A with UV | Support B without UV |
|---|---|---|---|
| Initial fluid contamination | ppm | 1,000 | 1,000 |
| Quantity of the reagent | g/m2 | 2,000 | 2,000 |
| Reaction temperature | °C | 80 | 80 |
| Reaction time of support A | hours | 3 | 3 |
| Final fluid contamination | ppm | 25 | 85 |

## EXAMPLE 4 - SUPPORT: PLASTER CONTAMINATED WITH PCDD AND PCDF

A mixture of Nixolen® VS13 - sodium methylate (85:15 by weight) in the amount of 1500 g/m² is spread on 1 m² of a wall with a plaster contaminated by PCDD and PCDF as a result of an explosion and a fire of electric condensers which had been impregnated with PCB. The wall is then exposed for 96 hours to an ultraviolet source from a mercury vapor lamp at high pressure operating at 500 W. At the end of the treatment, the wall is washed (wiped) and then it is analyzed by gas mass analysis (GCMS) and comparison is made between the initial and the final contamination. The results are reported bereinbelow.

EP 0 257 170 B1

| COMPOUNDS IDENTIFIED IN THE ANALYSIS GC-MS | UNIT OF MEASURE | BEFORE | AFTER |
|---|---|---|---|
| 2, 3, 7, 8 TCDF | ng/wipe | 206 | N.D. |
| TCDD | ng/wipe | N.D. | |
| TCDF | ng/wipe | 1040 | N.D. |
| PCDD | ng/wipe | 1480 | N.D. |
| PCDF | ng/wipe | 80 | N.D. |
| HXCDD | ng/wipe | 659 | N.D. |
| HXCDF | ng/wipe | N.D. | N.D. |
| OCDD | ng/wipe | 1,9 | N.D. |
| OCDF | ng/wipe | N.D. | N.D. |

(*) N.D. means "not determined" because less then the amount detected by GCMS.

## Claims

1. A method for the decomposition of a polyhalogenated organic compound by reaction with a reagent consisting of compounds formed by condensation of propylene oxide and ethylene oxide, of alkali or alkaline earth alcoholate and optionally an oxidizing agent or a source of free radicals, characterized in that the decontamination reaction if carried out in the presence of artificial ultraviolet radiation.

2. The method according to claim 1, wherein said polyhalogenated compound is on a metallic or porous surface, in a hydrocarbon fluid, a silicone fluid or in a non-halogenated synthetic fluid.

3. The method according to claim 1, wherein the reagent consists of 80–95% by weight of a polycondensate of ethylene oxide and propylene oxide and 20 to 5% by weight of an alkali alcoholate in the absence of an oxidizing agent.

4. The method according to any one of previous claims, wherein said reagent is applied on a contaminated porous surface, in form of a solution in a mono-alkyl or di-alkyl ethylene glycol or propylene glycol, optionally in addition with tensioactive and surfactant agents mixed thereto.

5. The method according to any one of previous claims, wherein said polyhalogenated compound is polychlorobiphenyl (PCB), a polychlorodibenzofuran (PCDF), a polychlorodibenzodioxin (PCDD) or bromine or fluorine analogs thereof.

6. The method according to any one of precious claims, wherein the reaction is carried out in the presence of heat sources, IR, microwaves, ultrasounds electric fields.

## Patentansprüche

1. Verfahren zur Zersetzung einer mehrfach halogenierten organischen Verbindung durch Reaktion mit einem Reagenz bestehend aus Verbindungen, die durch Kondensation von Propylenoxid und Ethylenoxid gebildet sind, von Alkali oder Erdalkalialkoholat und wahlweise einem Oxydationsmittel oder einer Quelle von freien Radikalen, dadurch gekennzeichnet, daß die Dekontaminierungsreaktion unter Vorhandensein von künstlicher ultravioletter Strahlung durchgeführt wird.

2. Verfahren nach Anspruch 1, wobei die mehrfach halogenierte Verbindung auf einer metallischen oder porösen Oberfläche ist, in einem Kohlenwasserstofffluid, einem Silikonfluid oder in einem nicht halogenierten synthetischen Fluid.

3. Verfahren nach Anspruch 1, wobei das Reagenz aus 80 bis 95 Gewichtsprozenten eines Polykondensats eines Ethylenoxids und Propylenoxids und aus 20 bis 5 Gewichtsprozenten eines Alkalialkoholates bei Fehlen eines Oxydationsmittels besteht.

4. Verfahren nach einem der vorstehenden Ansprüche, wobei das Reagenz auf eine kontaminierte poröse Oberfläche in Form einer Lösung in einem Monoalkyl oder- Dialkylethylenglykol oder Propylenglykol aufgetragen wird, wahlweise unter Zugabe von dazu gemischten grenzflächenaktiven und oberflächenaktiven Stoffen.

5. Verfahren nach einem der vorstehenden Ansprüche, wobei die mehrfach halogenierte Verbindung Polychlorbiphenyl (PCB), ein Polychlordibenzofuran (PCDF), ein Polychlordibenzodioxin (PCDD) oder analog Brom oder Fluor ist.

6. Verfahren nach einem der Ansprüche 1 bis 5, wobei die Reaktion unter Vorhandensein von Wärmequellen, IR, Microwellen, ultraschallelektrischen Feldern durchgeführt wird.

**Revendications**

1. Procédé pour la décomposition d'un composé organique polyhalogéné par réaction avec un réactif constitué de composés formés par condensation d'oxyde de propylène et d'oxyde d'éthylène, d'un alcoolate alcalin ou alcalino-terreux, et, facultativement, d'un agent oxydant ou d'une source de radicaux libres, caractérisé par le fait que la réaction de décontamination est effectuée en présence de rayonnement ultraviolet artificiel.

2. Procédé selon la revendication 1, dans lequel ledit composé polyhalogéné se trouve sur une surface métallique ou poreuse, dans un fluide hydrocarboné, une huile de silicone ou dans un fluide synthétique nonhalogéné.

3. Procédé selon la revendication 1, dans lequel le réactif est constitué par 80–95% en poids d'un polycondensat d'oxyde d'éthylène et d'oxyde de propylène et 20 à 5% en poids d'un alcoolate alcalin, en l'absence d'un agent oxydant.

4. Procédé selon l'une des revendications précédentes, dans lequel ledit réactif est appliqué sur une surface poreuse contaminée, sous la forme d'une solution dans un mono-alkyl ou di-alkyl éthylène glycol ou propylène glycol, facultativement en addition avec des agents tensioactifs et de surface mélangés à celle-ci.

5. Procédé selon l'une quelconque des revendications précédentes, dans lequel ledit composé polyhalogéné est le polychlorobiphényle (PCB), un polychlorodibenzofuranne (PCDF), une polychlorodibenzodioxine (PCDD) ou leurs analogues bromés ou fluorés.

6. Procédé selon l'une quelconque des revendications précédentes, dans lequel la réaction est effectuée en présence de sources de chaleur, d'IR, de micro-ondes, d'ultrasons, de champs électriques.